(19) Europäisches Patentamt
European Patent Office
Office européen des brevets

(11) **EP 2 046 917 B1**

(12) **FASCICULE DE BREVET EUROPEEN**

(45) Date de publication et mention
de la délivrance du brevet:
**18.05.2011 Bulletin 2011/20**

(51) Int Cl.:
*C10G 3/00* *(2006.01)*     *C10G 49/02* *(2006.01)*
*C10L 1/18* *(2006.01)*     *C10L 1/08* *(2006.01)*
*C01B 3/50* *(2006.01)*     *C10K 1/00* *(2006.01)*

(21) Numéro de dépôt: **07823298.0**

(22) Date de dépôt: **18.07.2007**

(86) Numéro de dépôt international:
**PCT/FR2007/001234**

(87) Numéro de publication internationale:
**WO 2008/012415 (31.01.2008 Gazette 2008/05)**

(54) **PROCEDE D'HYDROTRAITEMENT D'UNE CHARGE GAZOLE**

VERFAHREN ZUR HYDROBEHANDLUNG EINES GAS-ÖL-ROHMATERIALS

PROCESS FOR THE HYDROTREATMENT OF A GAS-OIL FEEDSTOCK

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **27.07.2006 FR 0606892**

(43) Date de publication de la demande:
**15.04.2009 Bulletin 2009/16**

(60) Demande divisionnaire:
**10186685.3**

(73) Titulaire: **TOTAL RAFFINAGE MARKETING
92800 Puteaux (FR)**

(72) Inventeurs:
• **MAYEUR, Vincent
F-76330 Notre Dame De Gravenchon (FR)**
• **VERGEL, César
F-76133 Maneglise (FR)**
• **MARIETTE, Laurent
F-14800 Deauville (FR)**

(74) Mandataire: **Largeau, Béatrice et al
Cabinet Jolly
54, rue de Clichy
75009 Paris (FR)**

(56) Documents cités:
**EP-A- 1 693 432     FR-A- 2 879 213
US-A- 2 917 532     US-A- 4 992 605
US-A- 5 705 722     US-B1- 6 270 655**

**Description**

L'invention concerne un procédé d'hydrotraitement d'une charge gazole,

En raison de la sévérisation des normes antipollution pour les moteurs diesel, les spécifications des gazoles moteurs au cours des deux dernières décennies ont évolué et font apparaître de nouvelles contraintes qui ont conduit à une modification des formulations des mélanges de gazoles moteurs.

Depuis janvier 2005, les spécifications des gazoles moteurs sont les suivantes (norme française EN590) :

Masse volumique (à 15°C) : 820-845 kg/m3
T95% (Température de distillation de 95% du gazole) : 360 °C (maximale)
Teneur en soufre : 50mg/kg (maximale)
Cétane moteur : 51 (minimum)
Cétane calculé (ASTM D4737) : 46 (minimum)
Point de trouble : < -5°C en hiver,
                                < +5°C en été.

Les bases recherchées sont donc des bases légères, sans soufre, à indice cétane élevé, et distillant complètement avant 360°C.

Les objectifs sont de réduire encore la teneur en soufre jusqu'à une valeur inférieure à 10mg/kg d'ici 2009 et d'augmenter la valeur minimale du cétane moteur.

Une solution pour améliorer l'indice de cétane consiste à ajouter un additif pro-cétane. Il s'agit le plus souvent de nitrates d'alkyle qui interviennent dans les étapes élémentaires d'oxydation avant l'auto-inflammation du mélange. Ils réduisent ainsi le délai d'inflammation et permettent d'accroître l'indice de cétane de 3 à 5 points selon la quantité ajoutée. Ils sont toutefois d'autant moins efficaces que l'indice de cétane d'origine est faible.

Une autre solution consiste à ajouter au mélange un carburant de substitution, tel qu'un biocarburant, car les esters d'huiles végétales présentent généralement un bon indice de cétane.

De ce fait, la directive européenne 2003/30/CE vise notamment à promouvoir l'utilisation de biocarburants. Dans les transports, la communauté européenne a adopté un objectif de part de biocarburants de 5,75% du PCI (Pouvoir calorifique Inférieur) des carburants en 2010. C'est-à-dire que la quantité de biocarburant présente dans le mélange doit procurer 5,75% du PCI du mélange.

Actuellement, le gouvernement français a instauré une taxe : la. TGAP (Taxe Générale des Activités Polluantes), qui concerne les carburants mis à la consommation sur le territoire français. Les carburants soumis à cette taxe sont le « SP95 », le « SP98 » et le « Gazole Moteur ». L'objectif de cette taxe est d'inciter l'incorporation de Biocarburant d'origine agricole en augmentant progressivement le %PCI (Pouvoir Calorifique Inférieur) de 1,75% en 2006 à 7,00% en 2010.

Cet ajout est réalisé sur la base énergétique et l'origine « Bio » des produits incorporés. Ainsi, l'ETBE (éthyl tertiobutyléther) voit son taux réduit puisqu'il ne contient que 47% d'éthanol (d'origine agricole) et un PCI inférieur à l'essence.

Pour les gazoles moteurs, les biocarburants les plus couramment utilisés sont les esters d'huile végétale, comme l'ester méthylique d'huile de colza (EMC).

Ces gazoles moteurs sont en général obtenus par mélange du biocarburant au gazole moteur après traitement de ce dernier. Ces mélanges sont ainsi souvent effectués par les distributeurs, juste avant la mise en distribution du carburant.

Les mélanges obtenus à partir d'esters méthyliques d'huile végétale présentent l'avantage d'un cétane conforme à la norme, mais leur densité est très supérieure à la spécification de la norme (supérieure à 800 kg/m3), ce qui entraîne des difficultés de formulation à des taux d'incorporation élevés. Les esters éthyliques d'huiles végétales conduisent également à des mélanges trop lourds.

On connaît déjà des procédés de raffinage de la biomasse qui ont été élaborés pour produire ces biocarburants. Ainsi, les documents US 4 992 605, US 5 705 722 et SE 520 633 décrivent des procédés d'hydrotraitement des triglycérides formant les huiles végétales. Les réactions mises en oeuvre sont toutefois fortement exothermiques. Afin de limiter les problèmes liés à cette forte exothermicité, il est nécessaire de faire recirculer jusqu'à 80% de la charge en sortie du réacteur d'hydrotraitement, à l'entrée de celui-ci, d'où la nécessité de la réalisation d'une installation nouvelle dédiée à ce procédé d'hydrotraitement, et de surdimensionner cette unité par rapport à la quantité de la charge réellement traitée.

La Demanderesse a mis au point un procédé d'hydrotraitement permettant d'incorporer un maximum de biomasse dans une charge gazole sans modification substantielle de l'unité d'hydrotraitement classique et, en particulier, sans dispositif de recycle d'effluent liquide en tête de réacteur, tout en obtenant un produit fini de qualité supérieure (densité, indice de cétane, point de trouble, stabilité).

A cet effet, l'invention concerne un procédé d'hydrotraitement catalytique d'une charge d'origine pétrolière de type gazole dans au moins un réacteur d'hydrotraitement en lit fixe, pour la fabrication de gazole, caractérisé en ce que l'on incorpore à ladite charge des huiles végétales et/ ou des graisses animales jusqu'à un taux de 30 % en masse, le mélange de ladite charge et des huiles végétales et/ou des graisses animales étant introduit dans le réacteur fonctionnant en une passe, sans recycle d'effluent liquide en tête de réacteur selon la revendication 1.

Le procédé d'hydrotraitement catalytique objet de la présente invention est susceptible de fonctionner dans des conditions particulièrement avantageuses lorsque ladite charge à traiter est introduite dans le réacteur avec un taux d'huiles végétales et/ou de graisses animales de 2,5 à 25% en masse.

En effet, selon l'invention, il n'est pas nécessaire d'apporter des modifications majeures aux unités pétrolières d'hydrotraitement des gazoles lorsque l'on incorpore dans ces derniers des quantités relativement faibles de biomasse (par exemple à des taux d'incorporation inférieurs à 10%), car la forte exothermicité de l'hydrotraitement des triglycérides de la biomasse est contrôlée par la présence de la charge gazole.

Toutefois, dès que le taux d'incorporation de biomasse dans la charge à hydrotraiter passe au dessus d'une telle valeur, il est encore possible d'utiliser une unité d'hydrotraitement conventionnelle sans modification majeure, et notamment sans recycle d'effluent liquide en tête de réacteur, en adaptant les conditions de façon connue en soi.

Selon des caractéristiques particulières de l'invention :

- la charge d'origine pétrolière de type gazole est choisie parmi les coupes de type gazole provenant de la distillation directe (ou straight-run (SR) selon la dénomination anglaise) d'un pétrole brut, les coupes de type gazole issues de différents procédés de conversion, et en particulier, celles issues du craquage catalytique et de la viscoréduction.
- les huiles végétales sont choisies parmi l'huile de palme, l'huile de soja, l'huile de colza, l'huile de tournesol, de préférence l'huile de palme, ou un mélange de deux ou plusieurs de ces huiles.
- on utilise une quantité d'hydrogène introduite dans le réacteur pour traiter la charge de 100 à 500 Normolitres de $H_2$ par litre de charge, de préférence de 120 à 450 Normolitres de $H_2$ par litre de charge.
- on traite la charge à une température de 320 à 420°C, de préférence de 340 à 400°C, et encore plus préférentiellement de 350 à 370°C.
- on traite la charge à une pression de 25 à 150 bars, de préférence de 30 à 70 bars.

Avantageusement, notamment lorsque le taux d'huiles végétales et/ou de graisses animales est important, on traite la charge sur au moins un lit catalytique contenant au moins pour partie un catalyseur à base d'oxydes de nickel.

Les lits catalytiques contenant des oxydes de NiW présentent en effet l'avantage de catalyser les réactions d'isomérisation, ce qui peut permettre d'améliorer, c'est-à-dire de réduire, le point de trouble du produit fini. En particulier, dans le cas d'une charge gazole comportant un point de trouble élevé, un lit catalytique contenant NiW, et de préférence des oxydes de NiW sur silice alumine amorphe, en favorisant les réactions d'isomérisation, va permettre de réduire très nettement le point de trouble du produit fini.

Les lits catalytiques contenant des catalyseurs de type oxydes de NiMo ont un fort pouvoir hydrogénant et hydrodéoxygénant des triglycérides.

On traite la charge au moyen de plusieurs lits successifs de catalyseurs, avec un premier lit contenant des oxydes de NiMo pour améliorer l'hydrogénation des triglycérides de la charge et/ou des oxydes de NiW pour catalyser les réactions d'isomérisation, et le ou les lits catalytiques suivants contenant des catalyseurs à base de CoMo qui présentent une bonne performance en hydrodésulfurisation à basse pression d'hydrogène (l'hydrogène ayant été en partie consommé par l'hydrogénation en présence du catalyseur à base de NiMo).

Les proportions des différents catalyseurs seront déterminées en fonction des réactions que l'on souhaite favoriser.

Dans une unité d'hydrotraitement classique, on sépare de l'effluent sortant du réacteur, des gaz qui seront réinjectés dans le réacteur après passage dans un système de traitement. Ces gaz, appelés gaz de recycle, contiennent essentiellement de l'hydrogène.

Lorsque le taux d'huiles végétales et/ou de graisses animales est important, l'hydrotraitement d'une charge gazole mélangée à ces huiles végétales et/ou graisses animales conduit à la formation de monoxyde de carbone CO qui va se retrouver dans ce gaz de recycle.

Dans une variante particulièrement avantageuse du procédé comprenant un traitement de gaz de recycle issu de l'hydrotraitement de la charge avant sa réinjection dans le réacteur, on effectue un traitement supplémentaire au cours duquel on traite le monoxyde de carbone présent dans ledit gaz de recycle et on le sépare dudit gaz de recycle avant sa réinjection dans le réacteur.

Il est ainsi possible de ne pas réinjecter le monoxyde de carbone dans le réacteur et de ne pas risquer d'inhiber le catalyseur.

Le traitement et la séparation du monoxyde de carbone peuvent être réalisés par l'introduction, dans le système de traitement des gaz de recycle, d'un dispositif de traitement et de séparation du monoxyde de carbone. En particulier, il est possible d'utiliser des équipements de conversion du CO (appelés « CO shifts » par les spécialistes) tels que ceux généralement fournis par les fabricants d'unité d'hydrogène.

Un tel traitement du CO peut être mis en oeuvre lorsque la teneur en CO des gaz de recycle atteint une valeur prédéterminée.

Avantageusement, on effectue en outre un traitement au cours duquel on traite le dioxyde de carbone présent dans ledit gaz de recycle et on le sépare dudit gaz de recycle avant sa réinjection dans le réacteur. Ce traitement est par exemple réalisé par passage du gaz de recycle dans un absorbeur amine.

Une autre façon particulièrement avantageuse d'utiliser l'invention, et là aussi dès que le taux d'huiles végétales et/ou de graisses animales est important, est de compenser l'exothermicité qui résulte nécessairement de l'ajout des ces huiles.

Ainsi, avantageusement, on contrôle l'exothermicité de l'hydrotraitement de la charge au moyen de systèmes de régulation thermique.

Dans une unité d'hydrotraitement classique, il s'agit par exemple de l'amélioration de la distribution liquide/gaz, de quench gazeux ou d'effluents liquides (c'est-à-dire l'apport de gaz ou liquides froids dans le réacteur), de répartition du volume de catalyseur sur plusieurs lits catalytiques, de gestion de préchauffe de la charge à l'entrée du réacteur, notamment par action sur le four et/ou les échangeurs de chaleur situés en amont du réacteur, sur des lignes de dérivation (by-pass), etc, pour abaisser la température à l'entrée du réacteur.

Le réacteur comprend au moins un lit catalytique contenant un catalyseur à base d'oxyde de nickel. Le procédé selon l'invention peut être mis en oeuvre dans une unité d'hydroraffinage comprenant au moins un réacteur d'hydrotraitement catalytique d'une charge d'origine pétrolière de type gazole selon l'invention.

Le procédé selon l'invention peut également être mis en oeuvre dans une unité d'hydroraffinage comprenant au moins un réacteur d'hydrotraitement catalytique d'une charge d'origine pétrolière de type gazole et un séparateur séparant les phases liquide et vapeur de l'effluent sortant du réacteur, caractérisée en ce qu'elle comprend, en aval du séparateur, une unité de traitement et de séparation du monoxyde de carbone présent dans la phase vapeur de l'effluent pour la mise en oeuvre du procédé selon l'invention.

Avantageusement, l'unité comprend en aval du séparateur, une unité de traitement et de séparation du dioxyde de carbone présent dans la phase vapeur de l'effluent pour la mise en oeuvre du procédé selon l'invention.

Les huiles végétales ou animales utilisées selon l'invention sont composées majoritairement de triglycérides d'acides gras (>90% en poids), les longueurs de chaîne dépendant de la nature de l'huile utilisée.

Les huiles végétales peuvent en particulier être l'huile de palme, l'huile de soja, l'huile de colza, l'huile de tournesol, ou un mélange de deux ou plusieurs de ces huiles. Ces huiles vont produire essentiellement des paraffines en C 15 à C 18.

L'huile de palme est donc particulièrement préférée, car c'est l'une des huiles comportant les chaînes carbonées les plus courtes, avec près de 50% de C16. Comme l'huile de palme est l'une des plus saturées, son hydrotraitement nécessite une quantité d'hydrogène moindre par rapport aux autres huiles. De plus, la stabilité thermique de l'huile de palme limite l'encrassement des échangeurs thermiques situés en amont du réacteur dans une unité d'hydroraffinage classique.

L'huile de palme présente en outre l'avantage d'avoir son profil centré sur celui de la charge gazole, ce qui limite la perturbation de ce dernier, d'être économique, et d'être peu utilisée pour l'alimentation humaine.

Comme graisses animales, on peut par exemple utiliser de la graisse de poisson.

Une façon particulièrement avantageuse d'utiliser l'invention, est donc d'utiliser préférentiellement l'huile de palme ou toute autre huile végétale ou d'origine animale susceptible de produire par hydrotraitement un maximum de paraffines en C15 à C18, de préférence en C15 ou C16, de façon à induire une augmentation importante de l'indice de cétane des charges produites tout en diminuant le plus possible la densité, et de mieux valoriser les bases à indice de cétane faible et densité élevée, telles que le LCO (« Light Cycle Oil ») qui se caractérise par une densité élevée et un indice de cétane très bas, et les gazoles issus de bruts acides qui présentent d'excellentes propriétés à froid mais ont comme caractéristiques de présenter une densité élevée et un faible indice de cétane.

L'invention est maintenant décrite en référence aux dessins annexés, non limitatifs, dans lesquels :

- la figure 1 est un schéma simplifié d'une unité 1 d'hydrotraitement classique d'une charge de type gazole ;
- la figure 2 est un schéma simplifié d'une section de séparation d'une unité d'hydrotraitement classique ;
- la Figure 3 représente la distribution des normal paraffines nCx dans les effluents, le nombre x étant en abscisse et le nombre n en ordonnée.

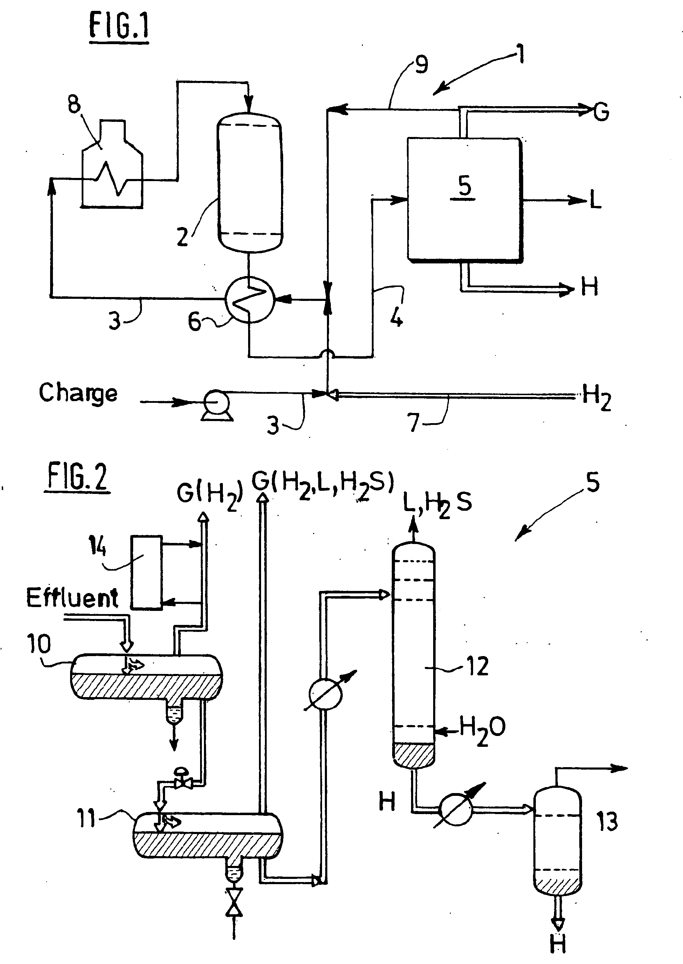

La figure 1 représente un schéma simplifié d'une unité 1 d'hydrotraitement classique d'une charge de type gazole.

Cette unité 1 comprend un réacteur 2 dans lequel est introduit la charge à traiter au moyen d'une ligne 3. Ce réacteur contient un ou plusieurs lits de catalyseurs d'hydroraffinage.

Une ligne 4 récupère l'effluent en sortie du réacteur 2 et le conduit à une section de séparation 5.

Un échangeur de chaleur 6 est placé en aval du réacteur sur la ligne 4 afin de chauffer la charge circulant dans la ligne 3, en amont du réacteur.

En amont de cet échangeur de chaleur 6, une ligne 7, raccordée sur la ligne 3, apporte à la charge à traiter un gaz riche en $H_2$.

En aval de l'échangeur de chaleur 6, et en amont du réacteur 2, la charge mélangée au gaz riche en $H_2$ circulant dans la ligne 3 est chauffée par un four 8.

Ainsi, la charge est mélangée au gaz riche en hydrogène, puis portée à la température de réaction par l'échangeur de chaleur 6 et le four 8 avant son entrée dans le réacteur 2. Elle passe ensuite dans le réacteur 2, à l'état vapeur s'il s'agit d'une coupe légère, en mélange liquide-vapeur s'il s'agit d'une coupe lourde.

A la sortie du réacteur, le mélange obtenu est refroidi, puis séparé dans la section de séparation 5, ce qui permet d'obtenir :

- un gaz $\underline{G}$ acide riche en $H_2S$, dont une partie est réinjectée dans le gaz riche en $H_2$ mélangé à la charge, au moyen d'une ligne 9,
- des produits légers $\underline{L}$ qui résultent de la décomposition des impuretés. L'élimination du soufre, de l'azote, ... conduit en effet à une destruction de nombreuses molécules et à la production de fractions plus légères,
- un produit hydroraffiné $\underline{H}$ de même volatilité que la charge mais aux caractéristiques améliorées.

De manière classique, l'effluent sortant du réacteur 2 est refroidi et partiellement condensé, puis pénètre dans la section de séparation 5.

Une telle section de séparation 5 comprend généralement (figure 2) :

- un premier ballon séparateur 10 haute pression (de l'ordre de 55 bars) qui permet de séparer de l'effluent un gaz $G(H_2)$ riche en hydrogène, ce gaz pouvant être recyclé,
- un deuxième ballon séparateur 11 basse pression (10 bars) qui sépare les phases liquide et vapeur obtenues par détente du liquide provenant du ballon 10 haute pression. Le gaz $\underline{G(H_2, L, H_2S)}$ obtenu contient principalement de l'hydrogène, des hydrocarbures légers et une grande partie de l'hydrogène sulfuré qui s'est formé dans le réacteur,
- un stripper 12 à vapeur d'eau dont la fonction est d'éliminer les hydrocarbures légers $\underline{L}$ et l'$H_2S$ résiduel de la charge traitée. Le produit hydroraffiné $\underline{H}$ est soutiré en fond de ce stripper,
- un sécheur sous vide 13 permettant d'éliminer l'eau solubilisée par le produit hydroraffiné chaud dans le stripper.

Selon l'invention, dans un réacteur faisant partie d'une unité d'hydrotraitement, telle que l'unité d'hydrodésulfuration du type décrit ci-dessus, on introduit en tant que charge un mélange d'une charge de type gazole et jusqu'à 30% en masse, de préférence de 2,5 à 25% en masse d'huiles végétales et/ou de graisses animales.

La couverture d'hydrogène, c'est-à-dire la quantité d'hydrogène mélangée à la charge est de 100 à 500 Nl/l, de préférence de 120 à 450 Nl/l.

La température de la charge moyenne réactionnelle est de 320°C à 420°C, de préférence de 340°C à 400°C, et préférentiellement de 350°C à 370°C.

La pression à l'intérieur du réacteur est de 20 à 150 bars, de préférence de 30 à 70 bars.

De préférence, une unité d'hydrotraitement catalytique selon le procédé de l'invention comprend également une unité 14 de traitement et de séparation du monoxyde de carbone produit dans le réacteur et séparé dans la section de séparation 5 de l'effluent.

De préférence, cette unité de traitement et de séparation est une unité de conversion qui transforme le CO en un autre composé que l'on peut éliminer facilement, tel que par exemple le dioxyde de carbone.

Il s'agit par exemple d'une unité de conversion du monoxyde de carbone en dioxyde de carbone selon la réaction :

$$CO + H_2O \rightarrow CO_2 + H_2$$

Le dioxyde de carbone résultant peut alors être facilement éliminé, par exemple, par un lavage aux amines, tandis que l'on peut récupérer l'hydrogène produit pour le réinjecter dans le réacteur ou le mélanger au gaz riche en hydrogène mélangé à la charge.

Une telle unité 14 de conversion du CO, connue en soi, est placée de manière à traiter la phase gazeuse séparée par là section de séparation 5.

Dans une section de séparation 5 comprenant des ballons séparateurs haute (10) et basse (11) pression tel que représenté sur la figure 2, cette unité 14 sera donc placée de préférence en sortie du gaz séparé par le séparateur haute pression (11).

La température à la sortie de ce ballon est de l'ordre de 40°C, et, selon la nature du catalyseur utilisé, la température de conversion du CO peut atteindre 350°C. Il peut alors être nécessaire de chauffer le gaz à traiter entrant dans cette unité de conversion.

De préférence, on choisira un catalyseur ne nécessitant pas de chauffage du gaz.

L'unité 14 de conversion de CO sera de préférence placée sur une ligne en dérivation, de manière à ce que la conversion du CO ne soit mise en oeuvre que lorsque la teneur en CO du gaz dépasse un seuil prédéterminé.

Selon les quantités de CO, on utilisera par exemple :

- une unité de conversion basse température (appelée habituellement LT Shift), fonctionnant à une température de 190-220°C, pour une teneur en CO inférieure à 5000 ppm en volume,
- une unité de conversion moyenne température (appelée habituellement MT Shift), fonctionnant à une température de 220-270°C, pour une teneur en CO de 10000 à 20000 ppm en volume,
- et une unité de conversion haute température (appelée habituellement HT Shift), fonctionnant à une température de 320-350°C pour une teneur en CO supérieure à 3% en volume.

Cette unité 14 de conversion peut être couplée à une unité de traitement et de séparation du $CO_2$, non représentée, et connue en soi.

**Exemples** utiles à la compréhension de l'invention.

Trois charges à base de gazole et d'huiles végétales ont été traitées dans une unité pilote d'hydrodésulfurisation (exemples 1 à 4).

La charge de gazole a été traitée sans incorporation d'huiles végétales dans l'exemple 1, qui sert de référence, et avec 5%, puis 10 % et 20 % en poids d'huile de palme dans les exemples 2, 3, et 4 respectivement.

Deux autres charges à base de gazole ont été traitées dans les exemples 6 et 7 avec 30% et 50% d'huiles végétales respectivement, afin d'illustrer la détermination par le calcul d'une limite maximale d'incorporation d'huiles végétales présentée dans l'exemple 5.

Les conditions d'expérimentation sont détaillées ci-après.

**Exemples 1 à 4**

*Installation*

Un procédé a été testé sur une unité pilote comprenant un réacteur fonctionnant en mode d'écoulement ascendant des flux de liquides et de gaz :

- Ce réacteur possède un diamètre de quelques centimètres de diamètre.
- Un réchauffeur placé en amont du réacteur permet de chauffer la charge à traiter avant son entrée dans le réacteur.
- L'unité pilote ne possède pas de recyclage des gaz et la charge est traitée en une seule passe, c'est-à-dire en « Once through » selon les spécialistes.
- La pureté de l'hydrogène injectée dans le pilote est de 100%. Le profil de température du réacteur est constant, le réacteur fonctionnant en mode isotherme.
- Une section de strippage à l'azote est présente à la sortie du réacteur afin d'éliminer les gaz $H_2S$, $NH_3$ et $H_2O$, au cas où ces composés seraient présents dans l'effluent.
- Le réacteur comprend sept lits catalytiques contenant un catalyseur constitué d'alumine poreuse sur laquelle sont déposés des oxydes de nickel et molybdène. Ce catalyseur se présente sous la forme d'extrudés de 1 à 2 mm de diamètre de forme quadrilobe.
- La densité de chargement est de 950 kg/m$^3$ de catalyseur chargé dans l'unité.

*Charge étudiée*

Une charge gazole à basse teneur en soufre a été utilisée dans les exemples, l'huile de palme étant de qualité alimentaire.

Les caractéristiques de la charge gazole et de l'huile de palme sont reportées dans les tableaux 1 et 2 respectivement.

**Tableau 1** : caractéristiques de la charge gazole

| Densité à 15°C | 0,8433 |
|---|---|
| Teneur en soufre (ppm) | 1260 |
| Teneur en azote basique (ppm) | 20 |
| Point de trouble (°C) | -4 |
| Point d'écoulement (°C) | - 6 |
| Indice de Cétane mesuré | 56 |
| Température de distillation de<br>5%<br>20%<br>50%<br>80%<br>95% du gazole (°C, ASTM 86) | <br>245,1<br>260,3<br>284,9<br>314,3<br>347,6 |
| Indice de brome (mg Br/ 100g) | 621 |
| Teneur en polyaromatiques (% en poids) | 8,2 |
| Teneur totale en aromatiques (% en poids) | 22,2 |

**Tableau 2** : caractéristiques de l'huile de palme

| Densité à 15°C (calculée) | | 0,8956 |
|---|---|---|
| Composition en acide<br>(pourcentages en poids) | | |
| Acide laurique | 12 : 0 | 0,2 |
| Acide myristique | 14 : 0 | 1,1 |
| Acide palmitique | 16 : 0 | 45,7 |
| Acide palmitoléique | 16 : 1 | 0,2 |
| Acide margarique | 17 : 0 | 0,1 |
| | 17 : 1 | <0,1 |
| Acide stéarique | 18 : 0 | 4,3 |
| Acide oléique | 1 : 1 | 37,7 |
| Acide linoléique | 18 : 2 | 9,8 |
| Acide linolénique | 18 : 3 | 0,2 |
| Acide arachidique | 20 : 0 | 0,4 |
| Acide gondoïque | 20 : 1 | 0,1 |
| | | |
| GPC : | | |
| Acides gras libres | | 0,7 |
| Monoglycérides | | <0,1 |
| Diglycérides | | 7,1 |
| Triglycérides | | 92,0 |
| Non indentifié | | 0,2 |
| Teneur en éléments (ppm)<br>Phosphore | | <br>0,5 |
| Calcium | | <0,2 |
| Cuivre | | <0,08 |
| Fer | | 0,04 |
| Magnésium | | <0,02 |
| Sodium | | <0,1 |

Le tableau 3 indique la densité et la teneur en soufre des charges des exemples 1 à 4. La densité de la charge augmente avec la proportion d'huile végétale incorporée.

**Tableau 3 :** soufre et densité des charges des exemples 1 à 4

|  | Densité à 15°C | Teneur en soufre (ppm) | GPC (triglycérides) (% en poids) |
|---|---|---|---|
| **Exemple 1 :** | 0,8433 | 1260 | 0 |
| **Exemple 2 :** | 0,8458 | 1190 | 5,0 |
| **Exemple 3 :** | 0,8499 | 1090 | 10,0 |
| **Exemple 4 :** | 0,8567 | 1040 | 20,0 |

*Couverture d'$H_2$*

Deux couvertures d'hydrogène $H_2$ (c'est-à-dire la quantité de normolitres d'hydrogène par litre de charge) ont été étudiées : 130 et 225 Nl/l.

Il est d'usage de fixer la couverture d'hydrogène à 3 fois la consommation d'hydrogène de la charge traitée en entrée du réacteur.

La couverture d'hydrogène de 225 Nl/l, est légèrement supérieure à trois fois la consommation en hydrogène de la charge traitée en entrée de réacteur avec un ajout de 10% en poids d'huile de palme.

La couverture d'hydrogène de 130 Nl/l correspond à 3 fois la consommation d'hydrogène d'une charge gazole sans huile de palme.

*Conditions opérationnelles*

Les conditions de fonctionnement du réacteur ont été calées sur un point de référence déterminé au préalable sur la charge gazole de référence.

La pression est de 40 bars et la température moyenne de traitement est de 340°C. Cette température permet d'assurer une teneur en soufre inférieure à 10 ppm à partir du gazole de référence traité ici.

Afin de ne pas avoir de craquage thermique des molécules de triglycéride en amont du réacteur, la température du préchauffeur est maintenue à plus basse température que d'usage : 320°C. C'est le premier lit catalytique qui assure le complément de chauffe de la charge.

Le tableau 4 (Conditions opératoires de l'unité pilote) résume les conditions opératoires de l'unité pilote utilisée :

**Tableau 4** : Conditions opératoires

| Pression totale (bar) | 40 |
|---|---|
| $H_2$/HC (Nl/l) | 130 et 225 |
| VVH ($h^{-1}$) | 1,0 |
| Température préchauffeur (°C) | 320 |
| Température réacteur (°C) | 340-350 |

Lors du changement de charge, les conditions opérationnelles sont maintenues constantes. La variation éventuelle de la teneur en soufre due à l'apport d'huile et/ou à la baisse de la couverture d'hydrogène est mesurée.

De plus, la conversion totale des triglycérides est confirmée par GPC (chromatographie en phase gazeuse). Par la suite, la température du réacteur peut être ajustée pour retrouver la teneur en soufre initiale (< 10ppm).

*Qualité des produits*

L'incorporation d'huile végétale en charge d'une unité d'hydrodésulfuration a pour conséquence d'ajouter des normal paraffines dans le produit final.

Le tableau 5 regroupe les résultats d'une analyse détaillée des effluents obtenus pour les 3 premiers exemples et une analyse partielle pour l'exemple 4.

Le tableau 5 démontre que :

- Les propriétés à froid des produits obtenus sont relativement stables. En effet, le point de trouble augmente de moins de 1°C à 10%pds d'incorporation d'huile de palme et la TLF (Température Limite de Filtrabilité) de l'ordre de 2°C.
- Le cétane moteur, quant à lui, progresse sensiblement : +2,2 pour le cétane moteur et +2,8 pour le cétane calculé à 10%pds d'huile de palme. Cette augmentation est très intéressante pour les gazoles nécessitant de l'additif pro-cétane pour répondre à la spécification.
- Les produits de la réaction des triglycérides distillant tous avant 360°C, le critère T95 (Température à laquelle 95% du produit a distillé) évolue favorablement sur cette spécification : -3,4°C à 5%pds d'huile végétale.

Ainsi, les caractéristiques des produits obtenus sont favorablement affectées par l'incorporation d'huiles végétales en charge d'une unité d'hydrodésulfurisation.

**Tableau 5 :** caractéristiques des effluents des exemples 1 à 4

| Exemple | 1 | 2 | | 3 | | 4 | |
|---|---|---|---|---|---|---|---|
| Couverture $H_2$/HC (Nl/l) | 225 | 225 | 130 | 225 | 130 | 225 | 130 |
| Temp. Réacteur (°C) | 340 | 340 | 340 | 340 | 340 | 340 | 340 |
| Densité à 15°C | 0,8382 | 0,8346 | 0,8352 | 0,8321 | 0,833 | 0,827 | 0,828 |
| Soufre (ppm) | 15,2 | 8,6 | 15,0 | 4,7 | 14,0 | 5,0 | 16,0 |
| Point de trouble (°C) | -5,0 | -4,6 | -4,7 | -4,3 | -4,1 | -2,5 | -2,2 |
| TLF (°C) | -9 | -10 | -9 | -9 | -7 | - | - |
| Indice cétane moteur | 56,2 | 56,7 | | 57,8 | 58,4 | 59,2 | 59,4 |
| Indice cétane calculé | 57,8 | 59,5 | 59 | 61 | 60,6 | - | - |
| Normal paraffine (% en poids) | | | | | | | |
| C14 | 2,32 | 2,20 | 2,26 | 2,16 | 2,11 | 1,97 | 2,04 |
| C15 | 2,68 | 3,13 | 3,23 | 3,99 | 4,21 | 5,94 | 6,43 |
| C16 | 2,51 | 3,61 | 3,54 | 4,37 | 4,17 | 5,31 | 4,76 |
| C17 | 2,34 | 2,80 | 2,91 | 3,86 | 4,13 | 6,29 | 6,63 |
| C18 | 1,98 | 3,08 | 2,97 | 3,88 | 3,67 | 5,15 | 4,5 |
| C19 | 1,56 | 1,48 | 1,48 | 1,40 | 1,42 | 1,38 | 1,32 |
| GPC (triglycérides) (% poids) | | <0,05 | <0,05 | <0,05 | <0,05 | <0,05 | <0,05 |
| Température de distillation (°C, ASTM D86) | | | | | | | |
| 5% (% de produit distillé) | 245,9 | 244,7 | 245,8 | 248,6 | 250,5 | | |
| 20% | 260,2 | 259,9 | 259,4 | 261,7 | 262,0 | | |
| 50% | 281,7 | 281,9 | 281,2 | 282,2 | 282,0 | | |
| 80% | 310,9 | 310,2 | 309,1 | 308,1 | 308,8 | | |
| 95% | 346,4 | 342,9 | 343,0 | 340,9 | 342,5 | | |

*Rendement en normal paraffines*

Le Tableau 2 indique que l'huile de palme est composée à 99%pds de glycérides. Les chaînes en C16 et C18 représentent 98% des acides contenus dans l'huile. L'hydrogénation de ces glycérides doit de préférence aboutir à la formation de chaînes paraffiniques de même longueur nC16 et nC18.

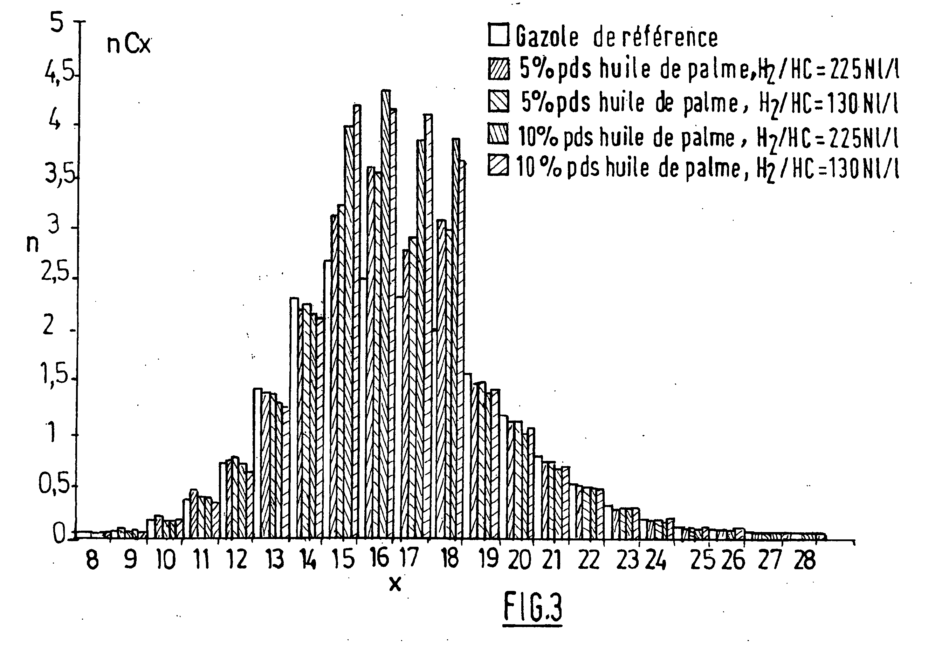

La Figure 3 représente la distribution des normal paraffines dans les effluents des exemples 1 à 3. L'ajout d'huile de palme en charge de l'hydrotraitement conduit à une augmentation importante des normal paraffines entre C15 et C18. La formation des chaînes de longueurs impaires est due à la décarboxylation ou la décarbonylation («décarb-») lors de l'hydrotraitement de l'acide. Cette réaction « parasite » conduit à l'émission d'oxyde de carbone (CO) et dioxyde de carbone ($CO_2$) à la place de l'eau ($H_2O$). De plus, une méthanation du CO conduit à la formation de $CH_4$.

Tel que visible sur la figure 3, il est intéressant de constater que la « décarb- » augmente en diminuant la couverture d'hydrogène et en augmentant le taux d'incorporation de l'huile. On observe une augmentation de 12%pds de décarb- entre 5%pds et 10%pds d'huile de palme.

Comme décrit précédemment, la décarboxylation/décarbonylation provoque l'émission de gaz CO, $CO_2$ dimi-

nuant la pression partielle d'hydrogène. De plus, outre les problèmes de sécurité sur les personnes, le CO est un inhibiteur réversible de l'activité désulfurante du catalyseur.

On a mesuré les taux de CO et $CO_2$ présents dans les gaz dans le cas de 10%pds d'incorporation d'huile de palme (exemple 3).

On a constaté que lorsque la couverture d'hydrogène est plus faible (130Nl/l, ce qui correspond à 1,8 fois la consommation d'hydrogène estimée), il se produit plus de décarb- sur les chaînes paraffiniques produisant ainsi plus de gaz en C1 (somme de CO, $CO_2$, $CH_4$). Par contre, la concentration en CO est moins importante dans le cas à faible couverture d'hydrogène pour favoriser la production de $CO_2$.

Ces résultats sont rassemblés dans le tableau 6.

**Tableau 6** : Teneur en CO et $CO_2$ des gaz en sortie de l'unité pilote

| Charge | Exemple 1 | | Exemple 2 | | | |
|--------|-----------|------|-----------|------|---------|------|
| H2/HC | 225 Nl/l | | 225Nl/l | | 130Nl/l | |
| | %mol | %pds | %mol | %pds | %mol | %pds |
| CO | 0,00 | 0,00 | 0,64 | 4,03 | 0,86 | 3,85 |
| CO2 | 0,00 | 0,00 | 0,88 | 8,70 | 2,37 | 16,57 |
| CH4 | 0,06 | 0,53 | 0,34 | 1,22 | 0,69 | 1,77 |

Une charge de 10% d'huile de palme correspond en terme d'exothermicité à environ 40% d'une charge de LCO, ou de 20% de gazole de viscoréduction + 10% de LCO. Cette exothermicité peut être contrôlée avec pas ou peu de changements opératoires d'une unité classique.

20% d'huile de palme correspondent en terme d'exothermicité à environ 60% de LCO, ou environ 40% de gazole de viscoréduction en tête de réacteur. L'exothermicité est alors contrôlée en jouant sur le nombre de lits catalytiques, en utilisant des quenchs adaptés,

**Exemple 5 : Détermination par le calcul de la limite maximale d'incorporation d'huiles végétales**

L'hydrodéoxygénation des triglycérides est une réaction très exothermique, ce qui limite l'incorporation de ces triglycérides en raison de l'écart de température extrême admissible au sein d'un réacteur. La limite basse est déterminée par la température à laquelle la réaction s'initie (288°C), la limite haute est déterminée par la limite de la métallurgie des réacteurs (443°C), soit un delta de température maximal de 155°C qui va permettre le calcul d'une limite maximale d'incorporation.

Un tel écart de température correspond à une incorporation maximale de 35.1%pds d'huile végétale en tête du réacteur, déterminé au moyen du calcul décrit ci-après. Cette valeur maximale permet de définir une limite haute proche de 30%pds $\pm$ 5 lorsque l'ajout de la biomasse est réalisé en tête du réacteur.

*Hypothèses de calcul*

Les hypothèses limitantes de l'application sont les suivantes :

-   Aucun recycle liquide n'est appliqué. L'huile n'est ajoutée qu'en tête du réacteur en mélange avec la charge hydrocarbure à désulfurer.

-   Il est considéré que la réaction d'Hydrodéoxygénation (HDO) est très rapide et quasiment complète dans le premier lit du réacteur. Ainsi aucun quench ne peut refroidir le milieu à ce niveau du réacteur.

-   Le réacteur possède une température limite d'utilisation due à sa métallurgie. Cette valeur est usuelle dans la conception de ce type de matériel et vaut 850°F (soit 453°C). Une marge de sécurité de 10°C est également prise : la température limite atteinte dans un réacteur industriel est donc de 443°C.

-   La réaction d'HDO s'initie à 288°C, ce qui correspond à la température à laquelle la liaison C-O se casse.

-   Le réacteur est considéré comme adiabatique : aucun échange de chaleur avec l'extérieur.

- Aucun niveau d'écart de température maximal qui limiterait l'application n'est pris en compte.

- La consommation d'hydrogène du gazole prise dans cet exemple est de 0.5%pds. Cette valeur correspond à un gazole « classique » dans une raffinerie. Un autre type de gazole, tel qu'un LCO, consommerait plus d'hydrogène et donc serait plus exothermique.

- La quantité d'hydrogène introduite en tête du réacteur vaut 3 fois la quantité consommée par les réactions *in situ*. Il est considéré à 0.5%pds d'hydrogène pour la part du gazole et 3%pds pour la part de l'huile végétale. La masse d'hydrogène ajoutée en tête est de : $M_{hydrogène} = 3 \times [0.5\% \times M_{gazole} + 3\% \times M_{huile}]$.

*Réalisation du calcul*

Données d'entrée

- D'après les hypothèses prises, la plage d'augmentation de température au sein du 1$^{er}$ lit ou dans l'ensemble du réacteur (si ce réacteur ne possède pas plusieurs lits) est comprise entre 288°C (température limite pour initier la réaction) et 443°C (température limite d'utilisation d'un réacteur),

Soit, $\Delta$**T maxi = 155 °C.**

- L'énergie dégagée lors de l'hydrodéoxygénation des triglycérides est d'environ **E$_{huile}$ = 1000 kJ/kg d'huile**. Cette valeur tient compte de l'état physique dans lequel les produits de la réaction sont présents. De plus, l'énergie peut varier suivant le type d'huile utilisée, l'huile de palme est plutôt proche de 950 kJ/kg alors que l'huile de tournesol (possédant plus d'insaturation) est proche de 1050 kJ/kg,
- L'énergie dégagée pour le traitement du Gazole est plus faible et est souvent exprimée par 14 kcal/mol $H_2$ consommée. Dans notre cas, nous considérons un gazole consommant 0,5%pds d'$H_2$ correspondant à **E$_{gazole}$ = 150 kJ / kg.**
- La « chaleur spécifique » du gazole est prise constante en fonction de la température et égale à : **CP$_{gazole}$ = 2,3kJ/kg/°C,**
- La chaleur spécifique d'une huile végétale est très proche d'un hydrocarbure. Dans cet exemple, cette donnée est prise égale à celle du gazole : **CP$_{huile}$ = 2,3 kJ/kg/°C**
- La chaleur spécifique de l'hydrogène est de :

$$CP_{H2} = 14{,}3 \ kJ/kg/°C.$$

Equations de base.

L'apport de chaleur au niveau du réacteur est la résultante de la réaction d'Hydrodéoxygénation de l'huile végétale et de la réaction de désulfuration du gazole :

$$Q_{apportée} = E_{huile} \times M_{huile} + E_{gazole} \times M_{gazole}$$

Le refroidissement du milieu est réalisé uniquement par la montée en température de l'huile, du gazole et de l'hydrogène se trouvant dans le réacteur :

$$Q_{refroidissement} = [\ CP_{huile} \times M_{huile} + CP_{gazole} \times M_{gazole} + CP_{H2} \times M_{hydrogène}\ ] \times \Delta T$$

Le réacteur étant adiabatique, ces deux quantités de chaleur s'égalent :

$$E_{huile} \times M_{huile} + E_{gazole} \times M_{gazole} = \Delta T \, [CP_{huile} \times M_{huile} + CP_{gazole} \times M_{gazole} + CP_{H2} \, (3[0.5 \% \times M_{gazole} + 3 \% \times M_{huile} ])]$$

En divisant cette équation par $M_{huile}$, le terme $\Psi = M_{gazole} / M_{huile}$ s'exprime par :

$$E_{huile} + E_{gazole} \times \Psi = [ \, CP_{huile} + CP_{gazole} \times \Psi + CP_{H2} \times [ \, 1.5\% \times \Psi + 9\%] \, ] \times \Delta T$$

L'expression finale est la suivante :

$$\Psi = \frac{E_{huile}/\Delta T - CP_{huile} - 0.09 CP_{H2}}{CP_{gazole} + 0.015 CP_{H2} - E_{Gazole}/\Delta T}$$

Application numérique

D'après les valeurs numériques définies précédemment, le ratio gazole sur huile $\Psi$ est de 1,85 pour un écart de température de 155°C. Ceci correspond à une incorporation maximale de 35,1 %pds d'huile végétale en tête du réacteur.

Pour un écart de température de 155°C, nous pouvons ainsi définir une limite maximale d'incorporation de 30%pds $\pm$ 5.

Les exemples 6 et 7 suivants montrent qu'au-delà de cette limite maximale, l'invention ne peut être mise en oeuvre sans recycle.

**Exemples 6 et 7**

*Installation*

Un procédé a été testé sur une unité pilote comprenant un réacteur adiabatique fonctionnant en mode d'écoulement ascendant des flux de liquides et de gaz :

- Ce réacteur possède un diamètre de 38 mm.
- Un réchauffeur placé en amont du réacteur permet de chauffer la charge à traiter avant son entrée dans le réacteur.
- L'unité pilote ne possède pas de recyclage des gaz et la charge est traitée en une seule passe, c'est-à-dire en « Once through » selon les spécialistes.
- La pureté de l'hydrogène injectée dans le pilote est de 100%.
- La température d'entrée du réacteur est imposée, le gradient de température étant la conséquence de l'exothermicité de la réaction.
- Une section de strippage à l'azote est présente à la sortie du réacteur afin d'éliminer les gaz $H_2S$, $NH_3$, CO, $CO_2$, et $H_2O$, au cas où ces composés seraient présents dans l'effluent.
- Le réacteur comprend un lit catalytique contenant un catalyseur constitué d'alumine poreuse sur laquelle sont déposés des oxydes de cobalt et molybdène. Ce catalyseur se présente sous la forme d'extrudés de forme trilobe.
- La densité de chargement est de 0,719 kg/m$^3$ de catalyseur chargé dans l'unité.

*Charge étudiée*

Une charge gazole à 1,16% en soufre a été utilisée dans ces exemples, l'huile de palme étant de qualité alimentaire.

Les caractéristiques de la charge gazole sont reportées dans le tableau 7. Les caractéristiques de l'huile de palme sont identiques à celles reportées pour le tableau 2 des exemples 1 à 4.

**Tableau 7** : caractéristiques de la charge gazole

| Densité à 15°C | 0,8685 |
|---|---|
| Teneur en soufre (ppm) | 11 600 |
| Soufre SDBT (ppm) | 7 990 |
| Teneur en azote (ppm) | 213 |
| Température de distillation de 5% 20% 50% 80% 95% du gazole (°C, ASTM 86) | 244,9 274,9 307,8 339,7 364,8 |
| Indice de brome (mg Br/ 100g) | 5 |
| Teneur en polyaromatiques (% en poids) | 13,6 |
| Teneur totale en aromatiques (% en poids) | 29,8 |

_Conditions opérationnelles et résultats_

La couverture d'hydrogène (c'est-à-dire la quantité de normaux-litres d'hydrogène par litre de charge) a été fixée à 3 fois la consommation d'hydrogène de la charge traitée en entrée du réacteur.

La couverture d'hydrogène utilisée pour les exemples 6 et 7 exposés est donc différente : à 30%pds d'huile de palme, la couverture est de 475Nl/l, et 660Nl/l à 50%pds d'incorporation.

Dans ces exemples, l'unité utilisée comporte un seul réacteur catalytique d'hydrotraitement, dans lequel le volume de catalyseur est de 500 cm$^3$. La pression est de 60 bars et la température d'entrée de traitement est de 300°C (température permettant d'assurer l'initiation des réactions d'hydrodéoxygénation).

La teneur en soufre de l'effluent n'est pas une cible du test. Le résultat du test consiste à mesurer la température de sortie du réacteur et à en déduire la température moyenne du réacteur (WABT).

Ces résultats sont présentés dans le tableau 8 suivant.

**Tableau 8** : résultats des exemples 6 et 7

| | | _Exemple 6_ | _Exemple 7_ |
|---|---|---|---|
| Pression absolue | bar | 60 | 60 |
| VVH | h-1 | 1 | 1 |
| Couverture | Nl/l | 475 | 660 |
| Teneur en huile | %pds | 30 | 50 |
| Température d'entrée | °C | 300 | 300 |
| Température de sortie | °C | 443 | 488 |
| Delta T | °C | 143 | 188 |
| WABT | °C | 395 | 425 |
| Densité | | 0.8298 | 0.8152 |
| Soufre effluent | ppm | 15 | 11 |

La réalisation de l'essai à 30%pds (exemple 6) entraîne une température de sortie du réacteur de 443°C qui est proche de la limite de la métallurgie usuellement utilisé dans la fabrication des réacteurs (limite fixée à 850°F soit 453°C).

L'incorporation d'une charge contenant 50%pds d'huile végétale dans une charge gazole classique (exemple 7) n'est pas applicable dans une unité industrielle sans recycle puisque la température de sortie est supérieure à la limite métallurgique usuelle utilisée dans les réacteurs industriels.

**Revendications**

1. Procédé d'hydrotraitement catalytique d'une charge d'origine pétrolière de type gazole dans au moins un réacteur d'hydrotraitement en lit fixe, pour la fabrication de gazole, **caractérisé en ce que** l'on incorpore à ladite charge des huiles végétales et/ou des graisses animales jusqu'à un taux de 30 % en masse, le mélange de ladite charge et des huiles végétales et/ou des graisses animales étant introduit dans le réacteur fonctionnant en une passe, sans recycle d'effluent liquide en tête de réacteur, et dans lequel la charge traverse au moins un premier lit catalytique dans le réacteur contenant au moins un catalyseur à base d'oxydes de NiMo et/ou de NiW, et au moins un des lits suivants contenant des catalyseurs à base de CoMo.

2. Procédé d'hydrotraitement catalytique selon la revendication 1, dans lequel on effectue une séparation des phases liquides et vapeur de l'effluent sortant du réacteur dans un séparateur.

3. Procédé d'hydrotraitement catalytique selon la revendication 1 ou 2 **caractérisé en ce que** le taux d'huiles végétales et/ou de graisses animales est de 2,5 à 25 % en masse.

4. Procédé d'hydrotraitement catalytique selon l'un des revendications 1 à 3 dans lequel la charge d'origine pétrolière de type gazole est choisie parmi les coupes gazole provenant de la distillation directe d'un pétrole brut, les coupes gazoles issues de différents procédés de conversion, en particulier, celles issues du craquage catalytique et de la viscoréduction.

5. Procédé d'hydrotraitement catalytique selon l'une des revendications 1 à 4, dans lequel les huiles végétales sont choisies parmi l'huile de palme, l'huile de soja, l'huile de colza, l'huile de tournesol, de préférence l'huile de palme, ou un mélange de deux ou plusieurs de ces huiles.

6. Procédé d'hydrotraitement catalytique selon l'une des revendications 1 à 5, dans lequel la quantité d'hydrogène introduite dans le réacteur pour traiter la charge est de 100 à 500 Normolitres de $H_2$ par litre de charge, de préférence de 120 à 450 Normolitres de $H_2$ par litre de charge.

7. Procédé d'hydrotraitement catalytique selon l'une des revendications 1 à 6, dans lequel la charge est traitée à une température de 320 à 420°C, de préférence de 340 à 400°C.

8. Procédé d'hydrotraitement catalytique selon l'une des revendications 1 à 7, dans lequel la charge est traitée à une pression de 2,5 à 15 MPa (25 à 150 bars), de préférence de 3 à 7 MPa (30 à 70 bars).

9. Procédé d'hydrotraitement catalytique selon l'une des revendications 1 à 8, dans lequel on effectue un traitement de gaz de recycle issu de l'hydrotraitement de la charge avant sa réinjection dans le réacteur d'hydrotraitement, au cours duquel on traite le monoxyde de carbone présent dans ledit gaz de recycle et on le sépare dudit gaz de recycle avant la réinjection du gaz de recycle ainsi traité dans le réacteur d'hydrotraitement.

10. Procédé d'hydrotraitement catalytique selon la revendication 9, dans lequel on effectue en outre un traitement au cours duquel on traite le dioxyde de carbone présent dans ledit gaz de recycle et on le sépare dudit gaz de recycle avant la réinjection du gaz de recycle ainsi traité dans le réacteur d'hydrotraitement.

11. Procédé d'hydrotraitement catalytique selon l'une des revendications 1 à 10, dans lequel on contrôle l'exothermicité de l'hydrotraitement de la charge au moyen de systèmes de régulation thermique.

**Claims**

1. Process for the catalytic hydrotreating of a feed of oil origin, of diesel fuel type, in at least one fixed-bed hydrotreating reactor, for manufacturing diesel fuel, **characterized in that** incorporated into said feed are vegetable oils and/or animal fats up to a level of 30% by weight, the mixture of said feed and vegetable oils and/or animal fats being introduced into the reactor operating in a single pass, without recycling liquid effluent at the top of the reactor, and wherein the feed crosses at least a first catalytic bed in the reactor containing at least one catalyst based on NiMo oxides and/or NiW oxides , and at least one of the following beds containing catalysts based on CoMo.

**2.** Catalytic hydrotreating process according to Claim 1, in which in a separator is performed a separation of liquid and vapour phases of the effluent exiting the reactor.

**3.** Catalytic hydrotreating process according to Claim 1 or 2, **characterized in that** the level of vegetable oils and/or animal fats is from 2.5 to 25% by weight.

**4.** Catalytic hydrotreating process according to one of Claims 1 to 3, in which the feed of oil origin, of diesel fuel type, is chosen from the diesel fuel cuts resulting from the direct distillation of a crude oil, the diesel fuel cuts derived from various conversion processes, in particular, those derived from catalytic cracking and from visbreaking.

**5.** Catalytic hydrotreating process according to one of Claims 1 to 4, in which the vegetable oils are chosen from palm oil, soya bean oil, rapeseed oil, sunflower oil, preferably palm oil, or a mixture of two or more of these oils.

**6.** Catalytic hydrotreating process according to one of Claims 1 to 5, in which the amount of hydrogen introduced into the reactor to treat the feed is from 100 to 500 Normal liters of $H_2$ per liter of feed, preferably from 120 to 450 Normal liters of $H_2$ per liter of feed.

**7.** Catalytic hydrotreating process according to one of Claims 1 to 6, in which the feed is treated at a temperature of 320 to 420°C, preferably of 340 to 400°C.

**8.** Catalytic hydrotreating process according to one of Claims 1 to 7, in which the feed is treated at a pressure of 2.5 to 15 MPa (25 to 150 bar), preferably of 3 to 7 MPa (30 to 70 bar).

**9.** Catalytic hydrotreating process according to one of Claims 1 to 8, in which is performed a treatment of recycling gas derived from the hydrotreating of the feed before its reinjection into the hydrotreatment reactor, during which the carbon monoxide present in said recycling gas is treated and is separated from said recycling gas before the reinjection of the recycling gas treated into the hydrotreatment reactor.

**10.** Catalytic hydrotreating process according to Claim 9, in which, in addition, a treatment is carried out during which the carbon dioxide present in said recycling gas is treated and is separated from said recycling gas before the reinjection of treated recycling gas into the hydrotreatment reactor.

**11.** Catalytic hydrotreating process according to one of Claims 1 to 10, in which the exothermicity of the hydrotreating of the feed is controlled by means of thermal control systems.

**Patentansprüche**

**1.** Verfahren zur katalytischen Hydrobehandlung einer Ladung mit Erdölursprung vom Gasöltyp in zumindest einem Hydrobehandlungsfestbettreaktor zur Herstellung von Gasöl,
**dadurch gekennzeichnet, dass**
in diese Ladung pflanzliche Öle und/oder tierische Fette bis zu einem Anteil von 30% Masse eingebracht werden, die Mischung dieser Ladung mit den pflanzlichen Ölen und/oder tierischen Fetten in den Reaktor eingebracht wird, der in einem Durchlauf arbeitet ohne Wiederzufuhr des flüssigen Ausflusses am Kopf des Reaktors, und
wobei die Ladung zumindest ein erstes Katalysatorbett in dem Reaktor durchläuft, das zumindest einen Katalysator auf der Basis von Oxiden von NiMo und/oder NiW enthält, und
zumindest eines der folgenden Betten Katalysatoren auf der Basis von CoMo enthält.

**2.** Verfahren zur katalytischen Hydrobehandlung gemäß Anspruch 1, bei dem eine Trennung der flüssigen und gasförmigen Phasen des Ausflusses, der aus dem Reaktor austritt, in einer Trennvorrichtung durchgeführt wird.

**3.** Verfahren zur katalytischen Hydrobehandlung gemäß Anspruch 1 oder 2, **dadurch gekennzeichnet, dass** der Anteil an pflanzlichen Ölen und/oder tierischen Fetten 2,5 bis 25 % Masse beträgt.

**4.** Verfahren zur katalytischen Hydrobehandlung gemäß einem der Ansprüche 1 bis 3, bei dem die Ladung mit Erdölursprung vom Gasöltyp gewählt ist aus Schnitten von Gasöl, die aus der direkten Destillation eines Rohöls stammen, Schnitten von Gasöl, die aus verschiedenen Umwandlungen hervorgehen, insbesondere die, die aus dem katalytischen Cracken und dem Visbreaking hervorgehen.

5. Verfahren zur katalytischen Hydrobehandlung gemäß einem der Ansprüche 1 bis 4, bei dem die pflanzlichen Öle gewählt sind aus Palmöl, Sojaöl, Rapsöl, Sonnenblumenöl, vorzugsweise Palmöl, oder einer Mischung aus zwei oder mehreren dieser Öle.

6. Verfahren zur katalytischen Hydrobehandlung gemäß einem der Ansprüche 1 bis 5, bei dem die Menge des zum Behandeln der Ladung in den Reaktor eingeführten Wasserstoffs 100 bis 500 Normliter $H_2$ pro Liter Ladung beträgt, vorzugsweise 120 bis 450 Normliter $H_2$ pro Liter Ladung.

7. Verfahren zur katalytischen Hydrobehandlung gemäß einem der Ansprüche 1 bis 6, bei dem die Ladung behandelt wird bei einer Temperatur von 320 bis 420 °C, vorzugsweise von 340 bis 400 °C.

8. Verfahren zur katalytischen Hydrobehandlung gemäß einem der Ansprüche 1 bis 7, bei dem die Ladung behandelt wird bei einem Druck von 2,5 bis 15 MPa (25 bis 150 bar), vorzugsweise von 3 bis 7 MPa (30 bis 70 bar).

9. Verfahren zur katalytischen Hydrobehandlung gemäß einem der Ansprüche 1 bis 8, bei dem eine Behandlung des Recyclinggases, das aus der Hydrobehandlung hervorgeht, vor seinem Wiedereinbringen in den Reaktor zur Hydrobehandlung durchgeführt wird, während der das Kohlenmonoxid, das in diesem Recyclinggas vorhanden ist, behandelt wird und es vor dem Wiedereinbringen des so behandelten Recyclinggases in den Reaktor zur Hydrobehandlung von dem Recyclinggas getrennt wird.

10. Verfahren zur katalytischen Hydrobehandlung gemäß Anspruch 9, bei dem weiter eine Behandlung durchgeführt wird, während der das Kohlendioxid, das in diesem Recyclinggas vorhanden ist, behandelt wird und es vor dem Wiedereinbringen des so behandelten Recyclinggases in den Reaktor zur Hydrobehandlung von dem Recyclinggas getrennt wird.

11. Verfahren zur katalytischen Hydrobehandlung gemäß einem der Ansprüche 1 bis 10, bei dem die Exothermizität der Hydrobehandlung der Ladung mittels eines Wärmeregelsystems gesteuert wird.

## FIG.1

## FIG.2

FIG.3

EP 2 046 917 B1

# EP 2 046 917 B1

## RÉFÉRENCES CITÉES DANS LA DESCRIPTION

### Documents brevets cités dans la description

- US 4992605 A
- US 5705722 A
- SE 520633